# EUROPEAN PATENT APPLICATION

(11) **EP 4 787 334 A1**
(43) Date of publication of application: **05.08.2026**
(21) Application number: 26000006.2
(22) Date of filing: 02.02.2026
(51) Int. Cl.: G06V 10/764, G06V 10/774, G06V 10/82, G06V 30/24

(54) **METHOD TO IMPROVE OBJECT RECOGNITION IN HIGH-RESOLUTION VISION SYSTEMS**

(30) Priority: 31.01.2025 US 202519043045
(71) Applicant: Datalogic IP Tech S.r.l., 40012 Lippo di Calderara di Reno (BO) (IT)
(72) Inventor: D'Ercoli, Francesco, 40131 Bologna (IT); Cumoli, Marco, 40050 Monte San Pietro (IT)
(74) Representative: Schohe, Stefan

(57) **Abstract**

A vision system and method may include an image sensor configured to capture an image having a first resolution of a scene in which multiple objects are captured in the image. The image may be at a first analysis level and each of the objects are associated with an object class. Computing device(s) may be in electrical communication with the image sensor, and be configured to generate additional image(s) having respective lower resolutions. Each of the additional image(s) being at at least one second analysis level. A map that associates the object class(es) with one or more different analysis levels may be used to indicate which of the object class(es) to identify at the corresponding analysis levels. A multiclass classifier may be executed for each of the corresponding analysis levels to identify objects within the respective images. A list derived from the identified objects may be formed and output.

## Description

### BACKGROUND

Machine vision and object identification applications are used to identify/classify multiple objects or object classes that can be very different in terms of shape, size, texture, and color. Identification of such objects is considered to be a multi-class, not binary, classification task for machine vision and classification application because more than two classes or types of objects are categorized. In such instances, there are typically hundreds of different objects that may be present with potentially multiple instances of the same object classes in a single image moving on a conveyor belt or production line, such as a highly automated parcel logistics and sorting system. In general, machine vision and identification applications have moved towards higher resolution, such as 10MB to 25MB per image, to help in classifying and identifying objects. However, having more resolution for images framed by a high-resolution image sensor is not necessarily an improvement. For example, the vast amount of data that is generated and the ability to perform multi-class classification for objects captured in the high-resolution images can be time consuming to the point that the ability to extract features from the images may be lost when operational speed is needed with moving objects, thereby limiting accuracy of the multi-class classification process.

Moreover, machine learning, such as a neural network capable of extracting features from the images, may emphasize disturbance information related to features of different objects (reducing the accuracy) and lead to excessive complexity, which may slow down processing of images for object identification and classification. In other words, there is a need to find, for each single image frame, an optimized resolution balance so that the images are not too low in resolution (it would be hard to distinguish information of different classes) and not too high in resolution (it would unnecessarily complicate the machine learning model and could also introduce "feature mismatch" when too much emphasis is put on features of one class over those of another class). Hence, choosing an image size (resolution) that is too low in resolution for one or more classes of objects leads to a model not capable of picking up on distinctive features of those classes, and choosing an image size (resolution) that is too big in resolution increases computational load and requires more sophisticated models (harder to train and heavy from the point of view of storing resources) to avoid being fooled by over-representation of some features over others.

In some object classification systems, identification of objects and cropping of the remainder of the image is used. However, such identification and cropping of objects in images can also be time consuming and potentially cause data for use in classifying objects to be lost or insufficient. As such, there is a need for more practical machine vision and identification applications to be able to recognize/classify multiple objects or object classes that can be very different in terms of shape, size, texture, and color when operating in fast moving environments, such as moving conveyer belts, pedestrians, vehicles, manufactured objects during production, and/or otherwise.

### BRIEF SUMMARY

To optimize resolution for object classification and identification when imaging moving objects, the principles described herein provide for different resolution levels of images and a learning phase to train multi-class classifiers associated with the different resolution levels to determine which object classes the multi-class classifiers are determined to have highest performance. The principles described herein address a real problem in practical applications with high-resolution imagers to choose for each processed image (not once and for all) an optimal resolution that leads to the highest class-by-class detection accuracy depending on backgrounds, textures, noise, colors, sizes and details of objects, number and types of objects, distances of the objects to a camera or imaging system, and so on. Based on the training, multi-class classifiers that are determined to have the best measured performance (e.g., highest accuracy or probability) for identifying classes of objects at different levels of image resolution (e.g., each level of a pyramid representation) are used by the imaging system (for identifying those object classes), thereby optimizing identification of different object classes and potentially reducing time for object identification and reducing memory usage.

One embodiment of a vision system may include an image sensor configured to capture an image having a first resolution of a scene in which multiple objects are positioned. The image may be at a first analysis level and each of the multiple objects are associated with an object class of multiple object classes. At least one computing device may be in electrical communication with the image sensor, and be configured to generate, from the image, at least one additional image having respective lower resolution. Each of the at least one additional image being at at least one second analysis level. A map that associates one or more of the object classes with one or more different analysis levels to indicate which of the one or more object classes may be used to identify at the corresponding analysis levels. A multiclass classifier may be executed for each of the corresponding analysis levels to identify objects of the object classes within the respective images. A list derived from the identified objects may be formed and output.

One embodiment of a method may include capturing an image having a first resolution of a scene in which multiple objects are positioned, the image may be at a first analysis level and each of the multiple objects are associated with an object class of multiple object classes. At least one additional image may be generated from the image and have respective lower resolutions. Each of the additional image(s) may be at least one second analysis level. A map that associates one or more of the object classes with one or more different analysis levels may be used to indicate which of the one or more object classes to identify at the corresponding analysis levels. A multiclass classifier may be executed for each of the corresponding analysis levels to identify objects of the object classes within the respective images. A list derived from the identified objects may be formed and output. The output list may be used by a system to count objects in the image, determine where to route the objects, and so on, as previously described herein.

### BRIEF DESCRIPTION OF THE FIGURES

Illustrative embodiments of the present invention are described in detail below with reference to the attached drawing figures, which are incorporated by reference herein and wherein:
**FIG. 1** is an illustration of an overview of an illustrative scanning environment inclusive of a high-resolution vision or imaging system that captures moving objects and uses a multi-resolution process for classifying and/or identifying the moving objects captured by the high-resolution vision system;
**FIG. 2** is an illustration of an illustrative learning phase of the multi-resolution process for classifying and/or identifying objects to be captured during an operating phase by the vision system of **FIG. 1****;**
**FIGS. 3A** and **3B** are illustrative tables that show (i) predicted class versus actual class and (ii) mapping of resolution versus class during the learning phase of **FIG. 2****;**
**FIG. 4** is an illustration of an illustrative imaging environment in which multi-resolution imaging analysis may be performed using the trained multi-class classifiers produced during the learning phase of **FIG. 2****;** and
**FIG. 5** is a flow diagram of an illustrative process for performing the multi-resolution process for classifying and identifying moving objects captured by a high-resolution vision system as described herein.

### DETAILED DESCRIPTION

The principles described herein provide for an optimized solution to using multi-class classifiers with a hierarchy of different levels of resolution images for classifying and/or identifying moving objects. The optimized solution may be established by training the multi-class classifiers during a learning phase so that object classification and/or identification may be performed for each class of object at respective optimized image resolutions or levels. The multi-class classifiers that are determined to have the highest probability of classifying and/or identifying objects at one level over the other levels during the learning phase may be used to identify or classify objects of respective classes. That is, each of the multi-class classifiers may be determined to have a highest probability of identifying object class(es) at a particular level during a learning process, so during operations, the respective object class(es) may be identified by those respective multi-class classifiers. By optimizing and associating multi-class classifiers with different image resolutions of different levels, a reduction in (i) processing needs and (ii) time to perform object classification and/or identification of moving objects may result. The multiclass classifiers may be executed simultaneously as each is processing a common image at different resolutions.

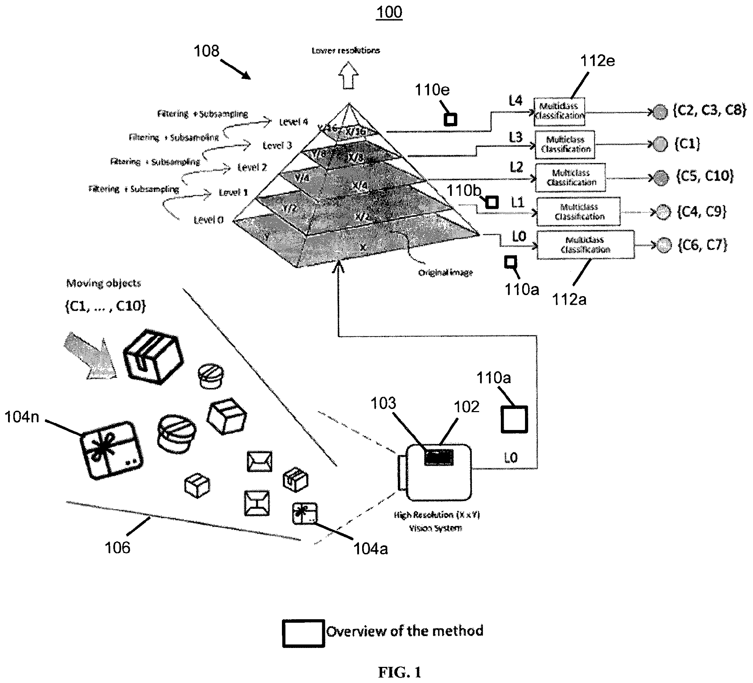

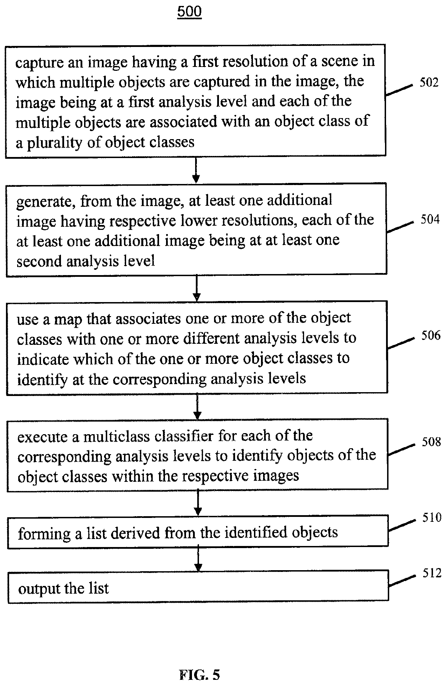

With regard to **FIG. 1****,** an illustration of an overview of an illustrative scanning environment **100** inclusive of a high-resolution vision or imaging system **102** that includes an image sensor **103,** as further described herein, that (i) captures moving objects **104a-104n** (collectively **104)** being moved by a conveyor **106,** and (ii) uses a multi-resolution process **108** for classifying and/or identifying the moving objects **104** captured by the high-resolution vision system **102** is shown. The vision system **102** may be a stationary industrial scanner or a non-stationary scanner or imager. The moving objects **104** may be classified as different object classes or types **C1-C10.** In operation, the high-resolution vision system **102** may capture an original image **110a** having a high-resolution (e.g., 10-25 megapixels per image), which may be defined as a base level 0 **(L0)** resolution due to having a highest number of pixels. The original image **110a** may be processed by at least one processor or computing device (see **FIG. 5****)** of the vision system **102** or communicated to another system, such as a server, for processing thereby. The original image **110a** may be a single image that may be one image of a sequence of original images that collectively define a video, for example, that capture the moving objects **104.** It should be understood that non-conveyer uses of the imaging system **102** for classifying and/or identifying other types of objects may be utilized, as well.

In an embodiment, the processing may be a multiresolution analysis of one or more original images **(L0)** produced by a high-resolution vision sensor (not shown) of the vision system **102** using a classic lowpass pyramid representation. The lowpass pyramid representation may be produced by repeatedly smoothing (e.g., Gaussian or Laplacian smoothing kernels) an image and subsampling the smoothened image to reduce the number of pixels for each successive resolution of the image of different levels 1-4 (i.e., levels **L1, L2, L3, L4).** As shown, each layer or level may be a reduction in resolution by 50% on each coordinate axis (e.g., **L0** (X,Y), **L1** (X/2, Y/2), **L2** (X/4, Y/4), **L3** (X/8, Y/8), **L4** (X/16, Y/16)). Each of the computed images **110b-110e** (e.g., images **110a-110e;** collectively images **110)** with reduced resolution **L1-L4** having a reduced number of pixels may be (i) output by the imaging system or high-resolution sensor or (ii) accessible in memory for the multiclassification analysis to be performed by another system or processor(s). It should be understood that the lowpass pyramid representation for reducing the number of pixels is one embodiment of computing lower numbers of pixels (i.e., lower image resolution) for different analysis levels and that alternative techniques for computing a reduced number of pixels at different levels may be utilized to perform the multiresolution analysis according to the principles described herein.

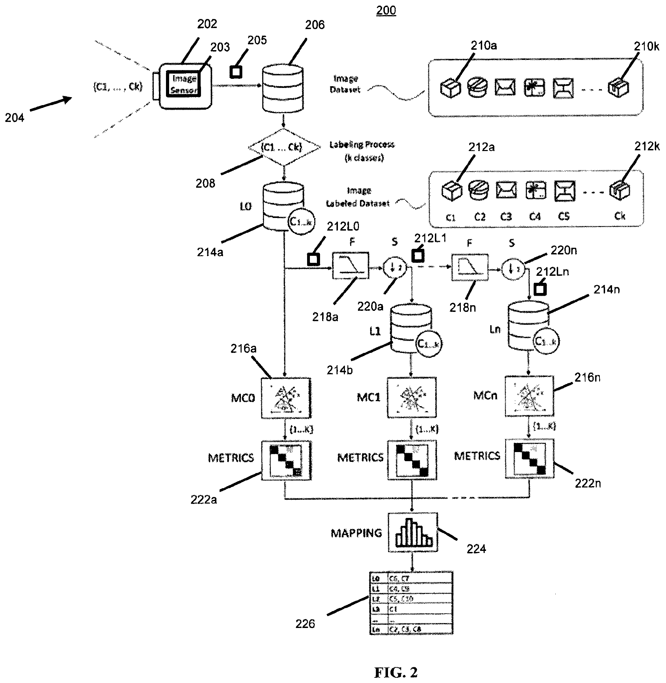

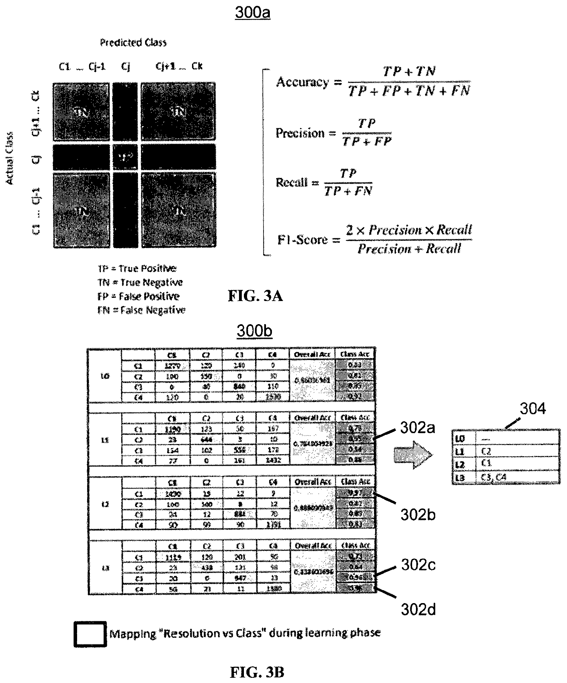

In an embodiment, the different types of objects (e.g., 10 classes of objects **C1-C10** representing different possible types of objects **104** (e.g., parcels) moving on the conveyor **106** and framed or imaged in different conditions and/or orientations) may be classified using several multiclass classifiers **112a-112e** (collectively **112)** equal to the number of analysis levels of the pyramid (e.g., 5 levels **L0-L4).** It should be further understood that an alternative number of levels (e.g., 3, 6, 8, 10, etc.) may be utilized in accordance with the principles described herein. Each of the classifiers **112,** once trained, may produce and output recognition probabilities for each of the object classes **C1-C10,** for example, but the imaging system **102** may limit output of the object classes of the multiclass classifiers determined to be most accurate at particular analysis levels **L0-L4** during a learning phase (see **FIGS. 2****,** **3A,** and **3B****).**

More specifically, as shown, although each of the multiclass classifiers **112** may perform computations to determine object classifications **C1-C10,** because probabilities of object classifications are higher for different classes based at least in part on the resolution of each of the levels, type of object, shape of object, content on object, background, etc., the multiclass classifiers **112** of the respective analysis levels may limit output (or selection of the object classes) from the multiclass classifiers **112** to just the object classes with the respective highest probabilities. The object classes with the highest probabilities by each of the multiclass classifiers **112** may be determined during the learning phase (see **FIGS. 2****,** **3A,** and **3B****),** as further described herein. In the instant example, the class(es) **C1-C10** to be output from the multiclass classifiers **112** are shown in **TABLE I** below. During operation, calculations for generating the different levels **L1-L4** of images captured by an image sensor along with executing the multiclass classifiers **112** may be performed in parallel, thereby supporting a real-time or near-real-time processing in identifying and/or classifying object classes **C1-C10.**

**TABLE I. Classifier and Classes with Highest Probabilities for Correct Object Classification**

| **Analysis Level** | **Multiclass Classifier** | **Output Class(es)** |
|---|---|---|
| L0 | 110a | C6, C7 |
| L1 | 110b | C4, C9 |
| L2 | 110c | C5, C10 |
| L3 | 110d | C1 |
| L4 | 110e | C2, C3, C8 |

With regard to **FIG. 2****,** an illustration of illustrative learning phase **200** of the multi-resolution process for classifying and/or identifying objects to be captured during an operating phase by the vision system of **FIG. 1** is shown. Generally, the learning phase **200** may include the following steps, (i) collecting and labeling a large dataset of images (e.g., 10,000 or more images) representative of different objects of K classes, (ii) simultaneously training N multiclass classifiers fed with the same images of the large dataset and lower resolution images obtained from the filtering and subsampling operation described, (iii) calculating performance metrics using the data present in the multiclass classifiers, and (iv) mapping resolutions/analysis levels to classes based on best performance in terms of accuracy or other parameter of each object class for each of the analysis levels **L0-Ln.**

More particularly, the learning phase **200** may include using a high-resolution vision system **202** with an image sensor **203** for capturing images of objects **204** to generate a training set of images **205** of objects **204** of different classes or types **C1-Ck** (collectively classes **C).** The images **205** of the objects **204** necessarily should include different operating conditions of interest, such as different backgrounds, shapes, sizes, textures, colors, distances, and otherwise to provide for a suitably large image dataset **210** for use in the learning process to provide for a robust object recognition system. It is common for 10,000 or more training images to be captured and used for training multi-class classifiers, and the training is typically performed offline (i.e., prior to the object recognition system being utilized in an operational situation). Fewer number of images may be used for training, but may result in the multiclass classifiers being less accurate. The images **205** captured of the objects **204** may be stored in a data repository **206** prior to being processed in a labeling process **208** as an original image dataset **210a-210k** organized by classes **K.** Once stored and/or organized as the image dataset **210,** the labeling process **208** may be performed to enable a user to classify the image dataset **210** of the objects **204** into respective image labeled datasets **212a-212k** with labels **C1-Ck** (collectively labeled image dataset **212),** for example. Labeling of the image dataset **210** may be performed manually, semi-automatically, or automatically. A data repository **214a** may store the image labeled dataset **212** at level **L0** (level **212L0),** which may have a number of pixels equal to those of the image sensor **203** (i.e., highest resolution). The number of pixels of the image labeled dataset **212** at analysis level **L0** is the highest of the image labeled datasets at the different analysis levels **L0-Ln.**

To support simultaneous training of N multiclass classifiers **MC0-MCn 216a-216n** (collectively **216),** the image labeled dataset **212L0,** which includes the original images of the image dataset **210a,** may be processed by filters **218a-218n** (collectively **218)** and subsampled by subsampling modules **220a-220n** (collectively **220)** to create subsampled training image sets **212L0-212La** (i.e., image labeled dataset **212a-212k** at lower resolutions associated with levels **L1-Ln)** that are appropriately scaled in resolution, such as described in **FIG. 1****,** and stored in respective data repositories **214b-214n** (collectively **214).** That is, each of the filters **218** may filter previous images of higher resolution prior to the respective subsampling modules **220.** During the learning process, the multiclass classifiers **216** may be trained on the respective image datasets **212L1-212Ln** having the different resolutions stored in each of the data repositories **214.** It should be noted that each of the image labeled datasets **212L1-212Ln** may be stored in each of the data repositories **214,** but the image labeled datasets **212L0-212Ln** stored in the different data repositories **214** have different resolutions due to the subsampling. As each of the multiclass classifiers **216** are trained, different metrics **222a-222n** (collectively **222)** may be calculated and output for each of the object classes **C1-Ck** of the different labeled image datasets **212L0-212Ln.** The metrics **222** may be mapped to show statistics of how well each of the multiclass classifiers **216** perform for the different image labeled datasets **212L0-212Ln** inclusive of the image labeled datasets **212a-212k** at the different resolutions. The data repositories **214** may be distinct locations in a common non-transitory, physical memory device (e.g., random access memory (RAM)) or data storage device (e.g., disk drive).

As each of the multiclass classifiers **216** are trained, different performance metrics **222a-222n** (collectively **222)** may be calculated and output for each of the object classes **C1...Ck** of the different labeled image datasets **212L0-212Ln.** The performance metrics **222** may be calculated to determine various parameters, including precision, recall, accuracy, and/or any other parameter using the data present in a multi-class confusion matrix for each level of analysis **L0-Ln.** A confusion matrix or error matrix is a table used to define performance of a classification algorithm, and is used to visualize and summarize performance of a classification algorithm. A mapping process **224** of the metrics **222** may be performed to show statistics of how well each of the multiclass classifiers **216** perform for the different image labeled datasets **212L0-212Ln** at the different resolutions. The mapping process **224** may show each of the resolutions/analysis levels **L0...Ln** with object classes **C1...Ck** that have best performances in terms of accuracy of each object class for each of the available analysis levels **L0-Ln.** The mapping process **224** may output a table or map **226** with rows with each level **L0-Ln** and classes of object classes **C1-Ck** that were determined to be best identified and classified by the respective multiclass classifiers **216** (e.g., the multi-class classifiers **216** having the highest probability for identifying the object classes **C1-Cn** for the different analysis levels **L0-Ln).** It should be understood that other forms of mapping may be output by the mapping process **224,** and the map **226** may be stored in memory for use during operations of an imaging or vision system, generally, but not necessarily, the same make and model vision system that captured the images **205** used for training.

With regard to **FIGS. 3A** and **3B****,** illustrative tables **300a** and **300b** that show (i) predicted class versus actual class and (ii) mapping of resolution versus class during the learning phase of **FIG. 2** are shown. The learning phase of **FIG. 2** may be used to map resolution versus class using a numerical example, such as with **N**=3, **K**=4. Starting from a multi-class confusion matrix built as usual, a performance parameter may be chosen (e.g., for accuracy, but could also be an F1-score) and calculated for each of the **K** classes. The table **300b** of **FIG. 3B** illustrates a confusion matrix that summarizes the performance of a machine learning model on a set of test data, in this case, sample images **205** of **FIG. 2****.**

In general, the confusion matrix provided by table **300b** displays the number of accurate and inaccurate instances based on the model's predictions and is used to measure the performance of the multiclass classifiers or classification models that are used to predict a categorical label for each input instance. The accurate and inaccurate instances are indicated as true positive (TP), true negative (TN), false positive (FP), and false negative (FN), as provided in table **300a.** Performance parameters may be include accuracy, precision, recall, F1-score, and/or otherwise. Accuracy may be computed as (TP+TN)/(TP+FP+TN+FN). Precision may be computed as TP/(TP+FP). Recall may be computed as TP/(TP+FN). F 1-Score may be computed as (2 x Precision x Recall) / (Precision + Recall). These and/or other parameters that are indicative of accuracy or predictability of the multiclass classifiers at each analysis level in identifying and/or categorizing object classes may be utilized for determine which of the multiclass classifiers to use to identify the object classes at each analysis level. For each object class, a highest determined accuracy (or other parameter) may be selected from amongst the set of all resolution levels. Each analysis level may be mapped to each of the object classes, but only the object classes that are determined to have a maximum or highest accuracy for that analysis level may be relied upon from that level (i.e., the object classes determined to be below the maximum at the other levels may be ignored or alternatively optionally used as potential verification for identifying and/or classifying the respective object classes after first identifying at an analysis level with a highest accuracy).

As shown in the numerical example shown in **FIG. 3B****,** the best accuracy may not be obtained by simply analyzing images at the maximum available resolution **(L0).** Indeed, for two classes of objects **(C3** and **C4),** it is determined that it is better to analyze the images at a lower possible resolution **(L3).** As such, accuracy of class **C3** is set for analysis level **L3.** Analysis level **L3** in this case has the lowest resolution, thereby showing that the multiclass classifier for object class **C3** performs best at the lowest resolution level **L3.** Furthermore, the resolution level with the highest overall accuracy or probability of the multiclass classifiers with 0.888090349 is level **L2,** which, however, is not the best choice since the multiclass classifier of level **L2** is only optimum in this example for one class of objects **(C1).**

More specifically, as shown, level **L1** has a multiclass classifier with a highest accuracy of identifying object class **C2** in field **302a,** and level **L2** has a multiclass classifier with a highest accuracy of identifying object class **C1** in field **302b,** level **L3** has a multiclass classifier with highest accuracy of identifying object classes **C3** and **C4** in respective fields **302c** and **302d.** Based on the table **300b,** during operation, the multiclass classifiers with the highest accuracies for identifying object classes **C1-C4** at the different levels **L0-L4** are used to identify objects of the different object classes **C1-C4** at those levels. And, because the classes are at levels with lower resolutions than **L0,** in this case none of the classes have a highest accuracy at level **L0,** processing may be faster and perform less computing since the multiclass classifiers for levels **L1, L2,** and **L3** are able to be used for analyzing the object classes **C1-C4** with images at lower resolution(s). Additionally, the multiclass classifier at level **L0** may not perform the object class classification process as the results are not to be relied upon due to having lower accuracies. It should be understood that each of the object classes **C1-Cn** may be analyzed at each of the levels **L0-L4,** but selection of the object classes **C1-Cn** may be limited to those levels with the highest probabilities or accuracies. It should further be understood that alternative examples, especially those with more object classes (e.g., **K**=10), may result in class(es) with highest accuracy at level **L0.** In an embodiment, if classification speed for identifying object classes is limited and classification probability at a higher level is acceptable for one or more object classes that are determined to be most accurate for identifying object classes at lower level(s) **L0, L1,** etc., then use of outputs of multiclass classifiers at the higher level may provide acceptable classification of object classes and be more time and processing efficient.

As a result of utilizing multiclass classifiers at different resolution levels, the ability to identify the objects when moving and possibly at higher rates may be higher due to the multiclass classifiers being more accurate and potentially significantly more accurate, than if only a single multiclass classifier were limited at a single resolution level. For example, the multiclass classifier accuracy of object class **C3** at level **L1** is only 0.56 (56%) and the multiclass classifier accuracy of object class **C2** at level **L4** is 0.64 (64%), while the multiclass classifier accuracies of object classes **C3** and **C2** are 0.96 (96%) at level **L3** and 0.95 (95%) at level **L1,** respectively. A map **304** with optimum or best output classifiers **C1-C4** to be identified by the multiclass classifiers at the respective levels **L0-L3** may be output and used during operations for determining from which levels **L1-L3** to identify object classes **C1-C4** so as to be most accurate.

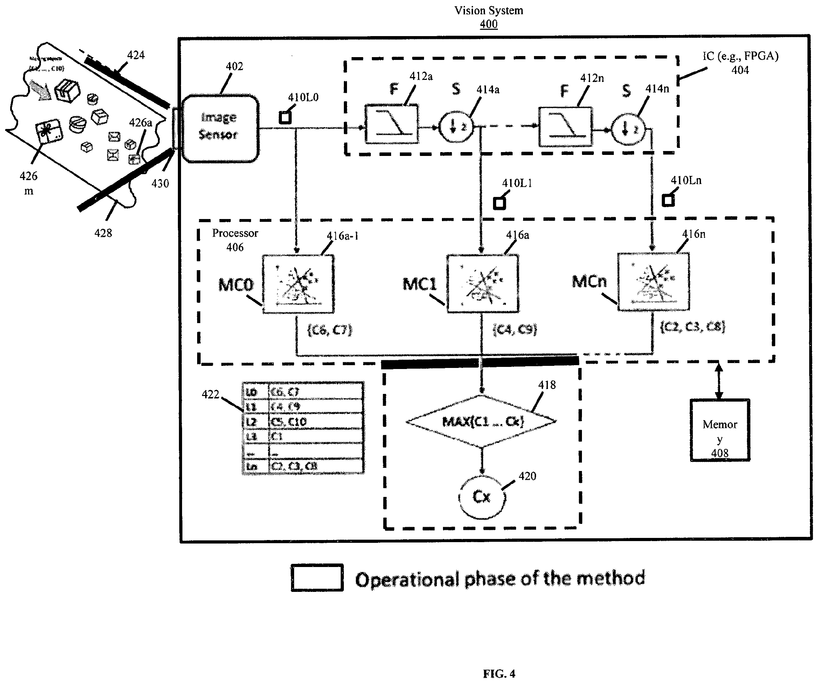

With regard to **FIG. 4****,** an illustration of an illustrative imaging or vision system **400** in which a multi-resolution image analysis may be performed using trained multiclass classifiers, such as, the multiclass classifiers **216** produced during the learning phase of **FIG. 2****,** for example, is shown. The vision system **400** is configured to operate in an operational phase that involves inferring a class of objects present in images captured by an image sensor **402.**

As shown, a multi-resolution image analysis pipeline may include one or more integrated circuits (IC(s)) **404,** such as at least one Field Programmable Gate Array (FPGA), Digital Signal Processor (DSP), Application Specific Integrated Circuit (ASIC), and/or otherwise. In an embodiment, the processor(s) may include Elkhart Lake processors, including Intel Atom x6000 E Series, Intel Pentium, and Intel Celeron N & J Series, just to name a few. The IC(s) **404** may be in communication with the image sensor **402** and at least one processor or computing device **406.** The processor(s) **406** may be in communication with a non-transitory memory **408** that may be utilized to store data and/or instructions configured to be executed by the processor(s) **406.** In an embodiment, the memory **408** may be onboard the processor(s) **406.** The IC **404** may also be in communication with the memory **408** or have onboard memory. In an embodiment, the image sensor **402** may include a memory or be in communication with the memory **408** or other memory that may also be available to the IC **404.** In an embodiment, the IC(s) **404** may be integrated with the image sensor **402** such that output of the image sensor **402** may include a full resolution image **410L0** and reduced resolution images **410L1-410Ln** (images **410L0-410Ln** collectively **410).**

The IC(s) **404** may be configured to support forming a lowpass pyramid representation of images by executing one or more filter modules (filters) **412a-412n** (collectively **412)** to smoothen images, and subsampler modules (subsamplers) **414a-414n** (collectively **414)** to reduce resolution of the smoothened images. In operation, the image sensor **402** may capture the full resolution image **410L0,** and then the pairs of filters and subsamplers **412a, 414a** ... **412n, 414n** may be executed to generate reduced resolution images **410L1-410Ln,** as previously described. The processor(s) **604** may be a general processor, digital signal processor, ASIC, FPGA, and/or any other type of processor may include software (and/or hardware) configured to execute multiclass classifiers **MC0-MCn** (collectively **MCs) 416a-1** - **416n** (collectively **416).** The multiclass classifiers **416** may be configured to perform classifications of the images **410** at respective levels **L0-Ln,** as previously described.

The processor(s) **406** may further be configured to include a selector function **418** that receives object class outputs from the multiclass classifiers **416** and form a class of **Xz (Cx)** as output **420.** The selector function **418** may select a maximum of the object classes **C1-Ck.** In an alternative embodiment, the selector function **418** and output **420** may be performed by another processor. The map **422** may be used by the selector function **418** to know what classes have the highest probability/accuracy for each multiclass classifier **416a-416n.** The output **420** may be the class with the highest probability or accuracy among the highest selected. The output **420** may be a list of classes/objects if multiple classes/objects have been identified/classified in the image set **410L0-410Ln.** As shown, level **L0** includes two classes **C6** and **C7** that were determined to have the highest probabilities for being identified by the multiclass classifier **416a-1.** As further shown, multiclass classifier **416a** outputs object classes **C4** and **C9,** and multiclass classifier **MCn** outputs object classes **C2, C3,** and **C8.** Levels **L2-Ln-1** may output the other object classes, as further described hereinbelow, because the object classes are determined to have the highest probabilities of identifying the respective object classes during a learning phase, as described with regard to **FIGS. 2****,** **3A,** and **3B****.**

In an embodiment, and as further described herein, if one or more of the multiclass classifiers associated with a different level **L1-Ln** has a probability of identifying and/or classifying object classes **C6** and/or **C7,** then a determination to use the other multiclass classifier(s) to identify and/or classify object classes **C6** and/or **C7** to avoid higher processing and time requirements for identifying and/or classifying object classes **C6** and/or **C7** using the multiclass classifier **416a-1** using the full resolution image **410L0.**

In operation, image sensor **402** may be configured to capture an image or sequence of images **410L0** of a scene **424** that may inclusive of objects **426a-426m** (collectively **426)** defined within object classes **C1-C10** that are moving on a conveyer **428,** such as a conveyer belt, that are moving towards and past a field-of-view of the image sensor **402** via a lens **430** of the vision system **400.** As shown, the **N** versions of the original image at level **L0** at lower resolutions are used as inputs to the multiclass classifiers **MCs** that output the probabilities for each of the **K** object classes (e.g., 10 object classes **C1-C10).** However, as previously described, despite each of the object classes **C1-C10** being available as outputs of the multiclass classifiers **MCs** at each of the levels **L0-Ln,** in an embodiment, only the probabilities or accuracies of the object classes **L0-Ln** indicated in the map **422** associated with the corresponding layers **L0-Ln** (i.e., on the same rows) are considered or used during operation of the imaging system. For example, object classes **C6** and **C7** are considered or used for level **L0,** object classes **C4** and **C9** are considered or used for level **L1,** etc., and provided as inputs to a selector function **412,** which may choose maximum probability value(s) of the highest probability of object classes at each level from the multiclass classifiers **MCs,** thereby determining a class of **Xz (Cx)** as output **420.** The output **420** may be used by a vision system for a variety of purposes, including, but not limited to, counting and/or sorting parcels from a conveyer, counting different types of vehicles (e.g., automobiles, trucks, motorcycles, etc.) on a freeway, etc.

It should be understood that multiresolution image analysis may also be performed with other types of multi-scale image representations (e.g., feature pyramid, wavelet methods, etc.). Multi-resolution image analysis is a process that may be performed efficiently using hardware acceleration, such as pre-processing by a Field Programmable Gate Array (FPGA). In terms of computational complexity, the adoption of multiclass classifiers instead of a single class classifier fits with parallel processing units as complexity of multiclass classifier **MC0** dominates over all the other multiclass classifiers **MC1-MCn.**

The principles of the process described herein allow for a considerable simplification of the training phase as illustratively presented in **FIGS. 2****,** **3A,** and **3B** related to each of the N multiclass classifiers as the multiclass classifiers are simpler classifiers and are relatively easier to train in the field. The processes described herein further allow for a quick and inexpensive adjustment in the event of new classes are added, which is one of the major maintenance costs of classical multiclass classifiers solutions (i.e., the use of classical multiclass classifiers solutions is significantly more difficult and expensive to add object classes).

The multiclass classifiers used may be of different types (e.g., neural networks, decision trees, Naïve Bayes, Support Vector Machines, etc.). Also, the metrics for "Resolution vs. Class" mapping may also be different if accuracy is used (e.g., an F1-score could be a good candidate) and indicate different prediction accuracy than the overall accuracy parameter. Alternative probability metrics may be utilized in performing mapping of levels versus classes. In cases where the distance of a framed object is known, it may be possible to apply the method in a targeted way (i.e., separate learning in inference for distinct distances), thereby increasing accuracy of the multiclass classifiers. The same class of objects, seen at different distances, may map (reaching optimal performance) at different resolution levels.

With regard to **FIG. 5****,** a flow diagram of an illustrative process **500** for performing the multi-resolution process for classifying and identifying moving objects captured by a high-resolution vision system as described herein is shown. The process **500** may start at step **502,** where an image may be captured having a first resolution of a scene in which multiple objects are positioned, the image may be at a first analysis level and each of the multiple objects are associated with an object class of multiple object classes. At step **504,** at least one additional image having respective lower resolutions may be generated from the image, where each of the additional image(s) may be at least one second analysis level. In an embodiment, a map that associates one or more of the object classes with one or more different analysis levels may be used to indicate which of the one or more object classes to identify at the corresponding analysis levels at step **506.** A multiclass classifier may be executed for each of the corresponding analysis levels to identify objects of the object classes within the respective images at step **508.** A list derived from the identified objects may be formed at step **510.** In deriving the list, the names, identifiers, classes, count, and/or any other information associated with each object that may be determined from the identified object classes may be formed in a list. The list may be of any configuration (e.g., text, graphical, numeric, etc.). The list may be output at step **512.** The list may be output as a completed list or individual elements that form the list. The list may be output real-time (e.g., as object classes and/or objects are identified) or non-real-time (e.g., after determining all of the object classes in the image). In outputting the list, the list may be output from at least one processor within a vision system or external from the vision system. If output from the vision system, the list or individual elements thereof may be output to an electromechanical device or controller thereof to cause the electromechanical device to move in a manner that causes one or more objects to be physically moved (e.g., removed or diverted from a conveyer belt or a pathway on which the object(s) are moving).

### USE CASES: Stationary Industrial Scanners (SIS) applications

The processes and systems described herein may be useful for SIS readers. Such SIS readers may utilize a 28MPxl image sensor and a processing platform based on highly scalable processors, such as the Elkhart Lake family of processors. The system may also utilize a Xilinx or other FPGA capable of real-time processing of acquired images, which is currently performed for image pre-processing in search of regions of interest, i.e., regions with the highest probability of 1D or 2D codes. Such processing may be reduced or eliminated utilizing the principles described herein. In addition, the system may adopt a Neural Network Acceleration (NNA) acceleration module, such as: AI Accelerator Hailo-8 M.2 AI Module | Superior Edge Performance. The system may include knowing and/or determining distance of the object from a camera through the use of specific sensors (2D TOF camera or Dimensioner), the information may be used to even more accurately select the most correct class identifier for each class depending on the resolution of the image under consideration. By selecting the most correct class identifier for each class, a different pyramid level association table and different best classifier by length may be utilized. In an embodiment, the reading distance range may be divided into N sectors and define the pyramid/classifier split table optimized for that distance range for each sector.

Utilizing the principles described herein may be integrated into existing vision systems. Several illustrative classification applications may be involved:
- Shape recognition of objects on the conveyor (with different classes of regular and irregular)
- Classification of types of tires on the conveyor
- Classification of types of luggage on an airport sorting solution
- Classification of items inside a sorting box
- Material classification of objects on a conveyor (cardboard types and/or other materials)
- Classification type of labels present on conveyor objects
- Classification of symbols on objects on a conveyor (e.g., among those in the hazardous materials)
- Image-based non-LFT dimensioning

These illustrative applications, approached in the traditional way with a standard Machine Vision (MV) approach or a deep learning neural network (NN) approach, may be characterized by extremely complex algorithms that require high computing power, so much so that in many cases external processing servers are used to which the full-resolution images are sent. In accordance with the principles described herein, the use of an FPGA to obtain different scaled images in parallel and subsequent use of parallel multiclass identifiers optimized for the specific resolution may result in a system that can be readily implemented and have a higher level of performance, including faster processing and higher accuracy. Moreover, the principles described herein results in reduced computing power and a cost reduction between successive generations of the same product at the same feature scope because the set of individual (simpler) classifiers is less expensive than a single multiclass classifier.

### Features

One embodiment of a vision system may include an image sensor configured to capture an image having a first resolution of a scene in which multiple objects are positioned. The image may be at a first analysis level and each of the multiple objects are associated with an object class of multiple object classes. At least one computing device may be in electrical communication with the image sensor, and be configured to generate, from the image, at least one additional image having respective lower resolutions. Each of the at least one additional image may be at least one second analysis level. A map that associates one or more of the object classes with one or more different analysis levels may be used to indicate which of the one or more object classes to identify at the corresponding analysis levels. A multiclass classifier may be executed for each of the corresponding analysis levels to identify objects of the object classes within the respective images. A list derived from the identified objects may be formed and output.

The computing device(s), in generating the at least one additional image, may further be configured to filter a previous image to produce at smoothened image. The smoothened image may be subsampled. The subsampled smoothened image is a lower analysis level. The computing device(s) may be configured to simultaneously generate the additional image(s). The computing device(s) may be integrated into the image sensor. The computing device(s) may be configured to execute the multiclass classifiers in parallel with one another, where each image of the different analysis levels is processed by a multiclass classifier at that level to identify the objects.

The multiclass classifiers, in identifying the objects in the respective images, may be further configured to determine probability of an object class for each of the objects in the respective images. The computing device(s) may be configured to select each object class from only one multiclass classifier, but not necessarily the same multiclass classifier, of the multiclass classifiers predetermined to be optimized for the respective object classes. The computing device(s) may be configured to associate each of the object classes to select from the respective multiclass classifiers based on accuracy for identifying the object classes during training of the multiclass classifiers.

The computing device(s) may further use the map that associates one or more object classes with one or more different analysis levels to select object classes from multiclass classifiers of the corresponding analysis levels. The map may be generated during a learning phase for the multiclass classifiers. The computing device(s), in executing each of the multiclass classifiers, may be configured to execute each of the multiclass classifiers to (i) determine each of the plurality of object classes for each of the corresponding analysis levels, and (ii) select object classes from one or more of the multiclass classifiers determined to be optimized in identifying respective object classes.

One embodiment of a method may include capturing an image having a first resolution of a scene in which multiple objects are positioned, the image may be a first analysis level and each of the multiple objects are associated with an object class of multiple object classes. At least one additional image may be generated from the image and have respective lower resolutions. Each of the additional image(s) may be at at least one second analysis level. A map that associates one or more of the object classes with one or more different analysis levels may be used to indicate which of the one or more object classes to identify at the corresponding analysis levels. A multiclass classifier may be executed for each of the corresponding analysis levels to identify objects of the object classes within the respective images. A list derived from the identified objects may be formed and output. The output list may be used by a system to count objects in the image, determine where to route the objects, and so on, as previously described herein.

Generating the additional image(s) may include filtering a previous image to produce at smoothened image, and subsampling the smoothened image, where the subsampled smoothened image is a lower analysis level. Generating the additional image(s) may include simultaneously generating the at least one additional image. Generating the additional image(s) may be performed by an image sensor.

Executing the multiclass classifiers may include executing the multiclass classifiers in parallel with one another, where each image of the different analysis levels is processed by a multiclass classifier at that level. Executing the multiclass classifiers to identify the objects in the respective images may include determining probability of an object class for each of the objects in the respective images. In an embodiment, each object class may be selected from only one multiclass classifier, but not necessarily the same multiclass classifier, of the multiclass classifiers predetermined to be optimized for the respective object classes.

The process may further include training each of the multiclass classifiers using sample images at each of the analysis levels and having the respective resolutions of the analysis levels. The map that associates one or more object classes with one or more different analysis levels at which the multiclass classifiers are determined to have the highest accuracy during a learning phase for the multiclass classifiers may be formed. Executing each of the multiclass classifiers may include determining each of the object classes for each of the corresponding analysis levels, and selecting object classes from one or more of the multiclass classifiers determined to be optimized in identifying respective object classes.

The embodiments of the invention may especially comprise the following examples:
1. A vision system, comprising:
   an image sensor configured to capture an image having a first resolution of a scene in which multiple objects are positioned, the image being at a first analysis level and each of the multiple objects are associated with an object class of a plurality of object classes; and
   at least one computing device in electrical communication with the image sensor, the at least one computing device configured to:
      generate, from the image, at least one additional image having respective lower resolutions, each of the at least one additional image being at at least one second analysis level;
      use a map that associates one or more of the object classes with one or more different analysis levels to indicate which of the one or more object classes to identify at the corresponding analysis levels;
      execute a multiclass classifier for each of the corresponding analysis levels to identify objects of the object classes within the respective images;
      form a list derived from the identified objects; and
      output the list.
2. The vision system according to example 1, wherein the at least one computing device, in generating the at least one additional image, is further configured to:
   filter a previous image to produce at smoothened image; and
   subsample the smoothened image, the subsampled smoothened image being a lower analysis level.
3. The vision system according to example 2, wherein the at least one computing device is configured to simultaneously generate the at least one additional image.
4. The vision system according to example 1, wherein the at least one computing device is integrated into the image sensor.
5. The vision system according to example 1, wherein the at least one computing device is configured to execute the multiclass classifiers in parallel with one another, wherein each image of the different analysis levels is processed by a multiclass classifier at that level to identify the objects.
6. The vision system according to example 5, wherein the multiclass classifiers, in identifying the objects in the respective images, are further configured to determine probability of an object class for each of the objects in the respective images.
7. The vision system according to example 6, wherein the at least one computing device is configured to select each object class from only one multiclass classifier, but not necessarily the same multiclass classifier, of the multiclass classifiers predetermined to be optimized for the respective object classes.
8. The vision system according to example 7, wherein the at least one computing device is configured to associate each of the object classes to select from the respective multiclass classifiers based on accuracy for identifying the object classes during training of the multiclass classifiers.
9. The vision system according to example 1, wherein the map that associates one or more object classes with one or more different analysis levels to select object classes from multiclass classifiers of the corresponding analysis levels is generated during a learning phase for the multiclass classifiers.
10. The vision system according to example 1, wherein the at least one computing device, in executing each of the multiclass classifiers, is configured to execute each of the multiclass classifiers to:
   determine each of the plurality of object classes for each of the corresponding analysis levels; and
   select object classes from one or more of the multiclass classifiers determined to be optimized in identifying respective object classes.
11. A method, comprising:
   capturing an image having a first resolution of a scene in which multiple objects are positioned, the image being at a first analysis level and each of the multiple objects are associated with an object class of a plurality of object classes;
   generating, from the image, at least one additional image having respective lower resolutions, each of the at least one additional image being at at least one second analysis level;
   using a map that associates one or more of the object classes with one or more different analysis levels to indicate which of the one or more object classes to identify at the corresponding analysis levels;
   executing a multiclass classifier for each of the corresponding analysis levels to identify objects of the object classes within the respective images;
   forming a list derived from the identified objects; and
   outputting the list.
12. The method according to example 11, wherein generating the at least one additional image includes:
   filtering a previous image to produce at smoothened image; and
   subsampling the smoothened image, the subsampled smoothened image being a lower analysis level.
13. The method according to example 12, wherein generating the at least one additional image includes simultaneously generating the at least one additional image.
14. The method according to example 11, wherein generating the at least one additional image is performed by an image sensor.
15. The method according to example 11, wherein executing the multiclass classifiers includes executing the multiclass classifiers in parallel with one another, wherein each image of the different analysis levels is processed by a multiclass classifier at that level.
16. The method according to example 15, wherein executing the multiclass classifiers to identify the objects in the respective images includes determining probability of an object class for each of the objects in the respective images.
17. The method according to example 16, further comprising selecting each object class from only one multiclass classifier, but not necessarily the same multiclass classifier, of the multiclass classifiers predetermined to be optimized for the respective object classes.
18. The method according to example 17, further comprising training each of the multiclass classifiers using sample images at each of the analysis levels and having the respective resolutions of the analysis levels.
19. The method according to example 18, further comprising forming the map that associates one or more object classes with one or more different analysis levels at which the multiclass classifiers are determined to have the highest accuracy during a learning phase for the multiclass classifiers.
20. The method according to example 11, wherein executing each of the multiclass classifiers includes:
   determining each of the plurality of object classes for each of the corresponding analysis levels; and
   selecting object classes from one or more of the multiclass classifiers determined to be optimized in identifying respective object classes.
Embodiments of the invention especially comprise a vision system comprising an image sensor and at least one computing device in electrical communication with the image sensor, wherein the vision system is configured to carry out the steps of a method according to one of examples 11 to 20, especially wherein the vision system comprises the features of a system according to one of examples 1 to 10.

The illustrations included herewith are not meant to be actual views of any particular systems, memory device, architecture, or process, but are merely idealized representations that are employed to describe embodiments herein. Elements and features common between figures may retain the same numerical designation except that, for ease of following the description, for the most part, reference numerals begin with the number of the drawing on which the elements are introduced or most fully described. In addition, the elements illustrated in the figures are schematic in nature, and many details regarding the physical layout and construction of a memory array and/or all steps necessary to access data may not be described as they would be understood by those of ordinary skill in the art.

As used herein, the singular forms "a," "an," and "the" are intended to include the plural forms as well, unless the context clearly indicates otherwise.

As used herein, "or" includes any and all combinations of one or more of the associated listed items in both, the conjunctive and disjunctive senses. Any intended descriptions of the "exclusive-or" relationship will be specifically called out.

As used herein, the term "configured" refers to a structural arrangement such as size, shape, material composition, physical construction, logical construction (e.g., programming, operational parameter setting) or other operative arrangement of at least one structure and at least one apparatus facilitating the operation thereof in a defined way (e.g., to carry out a specific function or set of functions).

As used herein, the phrases "coupled to" or "coupled with" refer to structures operably connected with each other, such as connected through a direct connection or through an indirect connection (e.g., via another structure or component).

The foregoing method descriptions and/or any process flow diagrams are provided merely as illustrative examples and are not intended to require or imply that the steps of the various embodiments must be performed in the order presented. As will be appreciated by one of skill in the art, the steps in the foregoing embodiments may be performed in any order. Words such as "then," "next," etc. are not intended to limit the order of the steps; these words are simply used to guide the reader through the description of the methods. Although process flow diagrams may describe the operations as a sequential process, many of the operations may be performed in parallel or concurrently. In addition, the order of the operations may be re-arranged. A process may correspond to a method, a function, a procedure, a subroutine, a subprogram, etc. When a process corresponds to a function, its termination may correspond to a return of the function to the calling function or the main function.

The various illustrative logical blocks, modules, circuits, and algorithm steps described in connection with the embodiments disclosed here may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

Embodiments implemented in computer software may be implemented in software, firmware, middleware, microcode, hardware description languages, or any combination thereof. A code segment or machine-executable instructions may represent a procedure, a function, a subprogram, a program, a routine, a subroutine, a module, a software package, a class, or any combination of instructions, data structures, or program statements. A code segment may be coupled to and/or in communication with another code segment or a hardware circuit by passing and/or receiving information, data, arguments, parameters, or memory contents. Information, arguments, parameters, data, etc. may be communicated (e.g., passed, forwarded, and/or transmitted) via any suitable means including memory sharing, message passing, token passing, network transmission, etc.

The actual software code or specialized control hardware used to implement these systems and methods is not limiting of the disclosure. Thus, the operation and behavior of the systems and methods were described without reference to the specific software code being understood that software and control hardware can be designed to implement the systems and methods based on the description here.

When implemented in software, the functions may be stored as one or more instructions or code on a non-transitory computer-readable or processor-readable storage medium. The steps of a method or algorithm disclosed here may be embodied in a processor-executable software module which may reside on a computer-readable or processor-readable storage medium. A non-transitory computer-readable or processor-readable media includes both computer storage media and tangible storage media that facilitate transfer of a computer program from one place to another. A non-transitory processor-readable storage media may be any available media that may be accessed by a computer. By way of example, and not limitation, such non-transitory processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that may be accessed by a computer or processor. Disk and disc, as used here, include compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a non-transitory processor-readable medium and/or computer-readable medium, which may be incorporated into a computer program product.

The previous description is of various preferred embodiments for implementing the disclosure, and the scope of the invention should not necessarily be limited by this description. The scope of the present invention is instead defined by the claims.

## Claims

1. A vision system, comprising:
an image sensor configured to capture an image having a first resolution of a scene in which multiple objects are positioned, the image being at a first analysis level and each of the multiple objects are associated with an object class of a plurality of object classes; and
at least one computing device in electrical communication with the image sensor, the at least one computing device configured to:
generate, from the image, at least one additional image having respective lower resolutions, each of the at least one additional image being at at least one second analysis level;
use a map that associates one or more of the object classes with one or more different analysis levels to indicate which of the one or more object classes to identify at the corresponding analysis levels;
execute a multiclass classifier for each of the corresponding analysis levels to identify objects of the object classes within the respective images;
form a list derived from the identified objects; and
output the list.

2. The vision system according to claim 1, wherein the at least one computing device, in generating the at least one additional image, is further configured to:
filter a previous image to produce at smoothened image; and
subsample the smoothened image, the subsampled smoothened image being a lower analysis level,
especially wherein the at least one computing device is configured to simultaneously generate the at least one additional image.

3. The vision system according to claim 1, wherein the at least one computing device is integrated into the image sensor.

4. The vision system according to claim 1, wherein the at least one computing device is configured to execute the multiclass classifiers in parallel with one another, wherein each image of the different analysis levels is processed by a multiclass classifier at that level to identify the objects.

5. The vision system according to claim 4, wherein the multiclass classifiers, in identifying the objects in the respective images, are further configured to determine probability of an object class for each of the objects in the respective images.

6. The vision system according to claim 5, wherein the at least one computing device is configured to select each object class from only one multiclass classifier, but not necessarily the same multiclass classifier, of the multiclass classifiers predetermined to be optimized for the respective object classes,
especially wherein the at least one computing device is configured to associate each of the object classes to select from the respective multiclass classifiers based on accuracy for identifying the object classes during training of the multiclass classifiers.

7. The vision system according to claim 1, wherein the map that associates one or more object classes with one or more different analysis levels to select object classes from multiclass classifiers of the corresponding analysis levels is generated during a learning phase for the multiclass classifiers.

8. The vision system according to claim 1, wherein the at least one computing device, in executing each of the multiclass classifiers, is configured to execute each of the multiclass classifiers to:
determine each of the plurality of object classes for each of the corresponding analysis levels; and
select object classes from one or more of the multiclass classifiers determined to be optimized in identifying respective object classes.

9. A method, comprising:
capturing an image having a first resolution of a scene in which multiple objects are positioned, the image being at a first analysis level and each of the multiple objects are associated with an object class of a plurality of object classes;
generating, from the image, at least one additional image having respective lower resolutions, each of the at least one additional image being at at least one second analysis level;
using a map that associates one or more of the object classes with one or more different analysis levels to indicate which of the one or more object classes to identify at the corresponding analysis levels;
executing a multiclass classifier for each of the corresponding analysis levels to identify objects of the object classes within the respective images;
forming a list derived from the identified objects; and
outputting the list.

10. The method according to claim 9, wherein generating the at least one additional image includes:
filtering a previous image to produce at smoothened image; and
subsampling the smoothened image, the subsampled smoothened image being a lower analysis level,
especially wherein generating the at least one additional image includes simultaneously generating the at least one additional image.

11. The method according to claim 9, wherein generating the at least one additional image is performed by an image sensor.

12. The method according to claim 9, wherein executing the multiclass classifiers includes executing the multiclass classifiers in parallel with one another, wherein each image of the different analysis levels is processed by a multiclass classifier at that level, especially wherein executing the multiclass classifiers to identify the objects in the respective images includes determining probability of an object class for each of the objects in the respective images.

13. The method according to claim 12, further comprising selecting each object class from only one multiclass classifier, but not necessarily the same multiclass classifier, of the multiclass classifiers predetermined to be optimized for the respective object classes.

14. The method according to claim 13, further comprising training each of the multiclass classifiers using sample images at each of the analysis levels and having the respective resolutions of the analysis levels,
especially wherein the method further comprises forming the map that associates one or more object classes with one or more different analysis levels at which the multiclass classifiers are determined to have the highest accuracy during a learning phase for the multiclass classifiers.

15. The method according to claim 9, wherein executing each of the multiclass classifiers includes:
determining each of the plurality of object classes for each of the corresponding analysis levels; and
selecting object classes from one or more of the multiclass classifiers determined to be optimized in identifying respective object classes.
